# EUROPEAN PATENT SPECIFICATION

(11) **EP 1 760 649 B1**
(45) Date of publication and mention of the grant of the patent: **21.12.2011**
(21) Application number: 06125601.2
(22) Date of filing: 25.02.2000
(51) Int. Cl.: G06Q 20/00, G06Q 30/00

(54) **Method and system for electronic commerce**
Verfahren und System für den elektronischen Handel
Procédé et système de commerce électronique

(30) Priority: 19.03.1999 SE 9901005
(43) Date of publication of application: 07.03.2007
(62) Divisional of application: 00921194.7
(73) Proprietor: Telefonaktiebolaget L M Ericsson (publ), 164 83 Stockholm (SE)
(72) Inventor: Skog, Robert, 165 76, Hässelby (SE); Pehrson, Staffan, 18239, Danderyd (SE)
(74) Representative: Norin, Klas

(56) References cited:
- EP-A2- 0 708 547
- WO-A2-98/42173
- WO-A2-98/47166

## Description

### Technical field

The present invention relates to a system and a method for electronic commerce through a data network and a method for checking that a purchase has been registered in a database connected via a data network. The methods and the system are in particular concerned with a data network with connection to a mobile radio network.

### Background

In electronic commerce, i.e. commerce where economic transactions are carried out between parties via a data network, it is important that the identity of whoever carries out the transaction can be secured.

A published patent application WO94/11849 tackles the problem of a user, who, from his or her telephone wants to use e.g. a bank service, has to give a code to get access to the service. A solution to the problem is presented through which it becomes possible for a user of a mobile station to be able to utilize the bank service without giving a code. The solution consists of the bank service being realized in an application, which can be reached from an internal telephone network. An entry to the internal telephone network is available for mobile stations included in a GSM network. To activate an included mobile station, it is required that its subscriber gives a code. Setup of a connection to the bank service takes place upon the request of a certain mobile station with an A-number. The A-number is available to the bank service at the setup. The bank service checks if the A-number is registered for a customer, and if so, the bank service is permitted to be utilized through the connection.

WO 98/47116 relates to a tele/data communications payment method. The tele/datacommunications network has a service node TSN which facilitates payments from a customer account to a merchant account. Data, such as merchant identifier and transaction amount are inserted by means of prompts issued of a peripheral 30C via a prompt generator interface.

A difference between the present invention and D1 is that data relating to the type of merchandise is not sent from the mobile terminal to the payment service application in D1. A further difference is that the payment service application receives the data directly from the mobile terminal in the present invention while D1 uses prompts as described above. A yet further difference is that the charging function sends time information.

EP 0708547 relates to an arrangement for providing credit to customers via cellular phones. D2 does not disclose that data relating to the type of merchandise is not sent from the mobile terminal to the payment service application.

WO 98/98/42173 relates to utilization of short message type data communications in order to provide banking services to the users of mobile terminals. D3 does not disclose that data relating to the type of merchandise is not sent from the mobile terminal to the payment service application.

### Description of the invention

A problem with the previously known art is that the subscriber, to be able to carry out a purchase, must establish a relation with the seller in advance for the latter to agree to the purchase.

Thus, an object of the present invention is to make purchases possible through a data network via a mobile terminal, where the identity of the buyer can be secured by means of functions in the mobile radio network in which the terminal is included. The invention is based on the observation that the identity of the buyer can be determined if he/she has a subscription in a mobile radio network for his/her mobile terminal.

This can be solved by a system comprising a mobile radio network with at least one mobile terminal. The terminal comprises an identification module and requires its subscriber to give a code for activation. The terminal has a certain identity which is sent in encrypted form through radio. The mobile radio network has a database with subscriber information and means to check the identity of the terminal. The system further comprises an internal packet data network connected to the mobile radio network. At least one serving computer connects to the packet data network. In the serving computer there is at least one application for a sales service. The packet data network is controlled by an operator who also controls the mobile radio network. The sales service is available through the packet data network for the mobile terminal only. In the database, subscriber data is read by order of the application, at which the buyer can be identified and charged.

This can also be solved by a method in which the seller by means of an application in a serving computer offers a piece of merchandise for sale. A buyer connects to the application by means of his/her own mobile terminal. This is possible due to an internal packet data network connecting the serving computer to a mobile radio network in which the terminal is included. When the buyer connects to the application, the application receives access to the identity of the terminal. The buyer agrees to a purchase via the application. By order of the application, subscriber data is then read from a database in the mobile radio network. The subscriber data is used for identifying the buyer and for making it possible to charge him/her. When reading from the database, the identity of the mobile station is stated, in order to find the correct data.

The present invention solves this problem by a method, intended to be used when a buyer and a seller physically meet and agree upon a purchase. Instead of paying the seller cash, the buyer registers the purchase by connecting, from his/her own mobile terminal, to an application in a serving computer. This is possible due to an internal packet data network connecting the computer to a mobile radio network in which the terminal is included. The application controls so that the purchase is registered in a charging database. The purchase is registered as an entry with information about merchandise and terminal identity. The application also generates a receipt code by allowing a certain algorithm to act upon any or some of the registered pieces of information about the purchase. The receipt code is sent back to the terminal and the buyer shows it to the seller. At the seller a code is generated as well, in the same manner as in the application. If the two codes correspond, the merchandise is delivered to the buyer. The entry in the charging database is checked against subscriber data in the mobile radio network to find the identity of the buyer, who has a subscription corresponding to the terminal identity. The buyer can then be charged and the seller is paid for the purchase.

According to the first mentioned method, a charging database is provided in the system and is controlled by the operator. When the buyer requests to buy a certain merchandise with a certain price, a charging entry is registered in the charging database, stating the price of the merchandise and the identity of the mobile station. The operator fetches, by means of the identity of the mobile station, information from the database to identify and charge the buyer. The operator pays the seller for the merchandise.

According to an alternative embodiment, new subscriber data is registered in the database, viz. the credit card number of the subscriber/buyer. When the buyer requests a purchase, he/she gives his/her credit card number to the application. Thereafter the application requests that the database check if the credit card number given by the buyer corresponds to a credit card number which is registered in the database with reference to the terminal identity. If the credit card number given by the buyer corresponds to a credit card number which is registered for the terminal identity, the purchase is carried out. The buyer is then charged by a credit card company in which he is a customer.

According to an embodiment, the communication between the terminal and the application takes place through an IP-protocol; a www-browser is used in the terminal and information is transferred in the form of hypertext links.

According to an alternative embodiment, a USSD-service (Unstructured Supplementary Service Data) is used within the GSM-network for information transfer. The GSM-network connects to the packet data network via a USSD Gateway, which transforms information in USSD-packets to packet data according to protocols in the packet data network, e.g. an internet protocol, and in the opposite direction transforms received packet data into USSD-format.

One advantage of the present invention is that a user of a mobile terminal, via the same can make purchases via a number of applications (AP1-AP3) without having created a relationship in advance with whoever provides a service realized by the application. The only thing required is that a relationship is maintained between the operator of the mobile radio network and the provider of the service.

A further advantage is that the risk of frauds in the commerce is greatly reduced. The mobile radio network has powerful functions for securing the terminal identity. The terminal identity is used through the internal packet data network to identify the buyer. Since only mobile terminals have the possibility of connecting to the packet data network, their identities cannot be manipulated. Also credit card numbers that are sent through the packet data network are protected against unauthorized reading since only one operator controls this network and therefore can give a guarantee against reading.

To realize the system according to the invention is cheap since the substantial functions for securing the identity of the subscriber/buyer are already realized in the mobile radio network. By giving the operator of the mobile radio network the control over the internal packet data network as well, an ordinary, rather cheap packet data network can be used.

Today's mobile radio networks have a large number of subscribers, and therefore a system according to the invention has already from the start a large amount of potential customers.

The invention will now be described closer with the aid of preferred embodiments and with reference to the attached drawing.

### Brief description of the drawings

Figure 1 is a view of nodes in a system according to the invention.
Figure 2 is a view of nodes in an alternative system according to the invention.

### Preferred embodiments

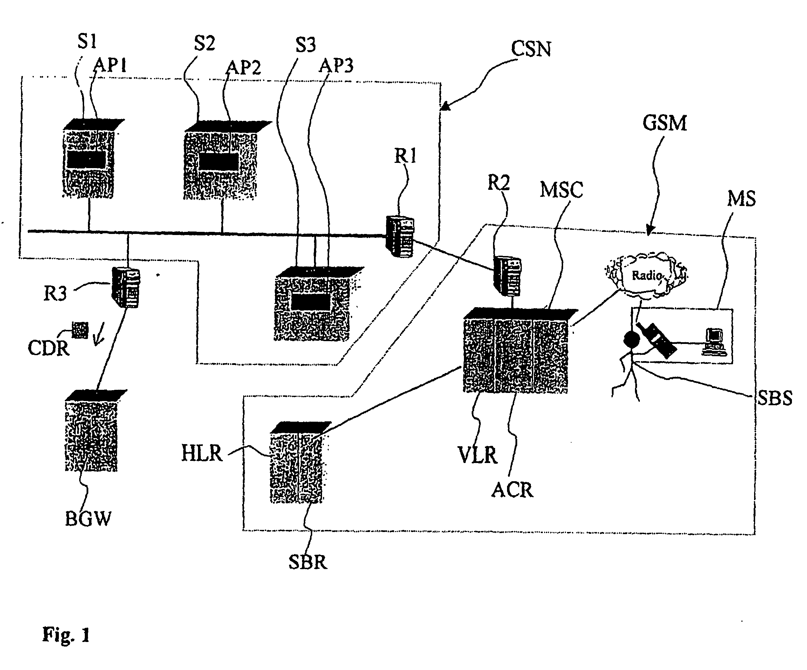

Figure 1 shows a system for electronic commerce. The system comprises a GSM-network GSM and an internal packet data network CSN, which constitutes an electronic market. The packet data network CSN in Figure 1 comprises three serving computers S1-S3, a router R1 and links therebetween. In each of the serving computers S1-S3 there is an application AP1-AP3 for sales of merchandise. The pieces of merchandise are offered by a service provider SP which also takes care of the application AP1-AP3.

The GSM-network GSM connects to the packet data network CSN by means of a second router R2 to the first router R1 of the packet data network CSN. The GSM-network GSM also comprises a switchboard MSC with connections to the second router R2, to a Home Location Register HLR and via radio to at least one mobile terminal MS. In this example, the mobile terminal MS comprises a traditional mobile station and a personal computer with a connection therebetween.

Apart from the packet data network CSN and the GSM-network GSM, the system also comprises a charging database BGW, which connects to the internal packet data network CSN via a third router R3. The charging database BGW, the GSM-network GSM and the packet data network CSN, besides the applications AP1-AP3, are controlled by an operator.

The applications AP1-AP3 offers sales by means of hypertext pages. The mobile terminal MS is provided with a www-browser.

The mobile terminal MS belongs to and is used by a subscriber SBS. In the terminal MS, there is a SIM-card, i.e. a subscriber identity module, to which a subscription in the GSM-network GSM corresponds and which states the identity of the terminal MS.

To activate (idle-mode) the terminal MS, it is required that the subscriber SBS gives a PIN-code. When this is done, signalling with the GSM-network GSM commences to register that the terminal MS is active and where it is located. At the signalling, the identity of the terminal MS is sent in encrypted form through the radio link.

When the terminal MS is registered, a connection to the router R2 of the GSM-network GSM is set up on the request of the subscriber SBS. The terminal MS is assigned a temporary IP-address, which is registered in an access database ACR in connection with the switchboard MSC. By means of the www-browser of the terminal MS, the subscriber SBS then requests a hypertext page from a first application out of the applications AP1. In this example the application AP1 is owned by a service provider which is a travel agency and which offers travel arrangements for sale, through the application AP1. Information on and prices of the travel arrangements are available on the hypertext page which is presented to the subscriber SBS. The subscriber SBS buys one of the travel arrangements by using a hypertext link, which sends information back to the first application AP1. Information, which the subscriber SBS actively supplies by pressing a button or filling a text entry window on the hypertext page, states that a certain travel arrangement is desired to be purchased for a fixed price. No information about who buys the travel arrangement is stated. The information is sent to the first application AP1 together with the temporary IP-address of the terminal MS.

When the first application AP1 has received information from the subscriber SBS that a certain purchase is desired, the application AP1 sends a charging entry CDR to the charging database BGW. The charging entry CDR comprises merchandise identity, price, time information and the temporary IP-address and is registered in the charging database BGW.

In the access database ACR in connection with the switchboard MSC, an entry is registered at the setup to the packet data network CSN, which entry comprises temporary IP-address, terminal identity and the point of time for use of the temporary IP-address.

In connection with the GSM-network there is a subscriber database SBR containing name and address of every subscriber in the GSM-network. The subscriber database SBR can be separate or constitute a part of an existing node in the GSM-network. In the continued presentation it is assumed that the subscriber database SBR is integrated in a home location register HLR.

The operator regularly runs the information in the charging database BGW, the access database ACR and the subscriber database SBR together, to connect the charging entry CDR in the charging database BGW with a certain subscription and to identify the buyer. From the access database ACR the identity of the terminal is obtained in the form of IMSI or MSISDN and with reference to any of these terminal identities, the name and charging address of the subscriber SBS is obtained from the subscriber database SBR. Name and address are reported to the service provider, in this case the travel agency, which thereafter sends tickets to the address registered with the operator.

The subscriber SBS is charged by the operator with the invoice for the subscription of the GSM-network. The operator pays the travel agency for the purchase of the travel arrangement.

The advantage of the above described method is that the identity of the buyer/sub-scriber SBS can be secured thanks to the identity checks that already are built-in in the GSM-network.

The operator controls the internal packet data network CSN and allows mobile terminals MS in the GSM-network only, to connect to the packet data network CSN. The reason for this is to make manipulation of temporary IP-addresses, which are reported to a receiving application AP1-AP3, more difficult. The applications AP1-AP3 are controlled by the respective service provider. However, the boundary for the applications AP1-AP3 against the packet data network CSN is controlled by the operator in order to prevent manipulation of data. At activation of the terminal MS, the visit database VLR of the switchboard MSC obtains subscriber data from the home location register HLR. According to a advantageous embodiment, these subscriber data are provided with information on whether or not it is permitted for the terminal MS to use the applications AP1-AP3 in the packet data network CSN. If it is not permitted, the switchboard MSC prevents a setup of a connection with the router R2 of the GSM-network. Thereby, use of the applications AP1-AP3 is prevented.

In a GSM-network with many switchboards MSC, preferably only one of the switchboards MSC is connected to the second router R2 for connection to the packet data network CSN. Only the switchboard MSC with connection to the router R2 is provided with the access database ACR.

Alternatively to, as has been described above, running the information in the charging database BGW and the access database ACR together afterwards, in order to find IMSI or MSISDN corresponding to a certain temporary IP-address, the first application AP1 makes a direct inquiry to the access database ACR. By referring to the temporary IP-address, the first application AP1 is informed about the identity of the mobile station in the form of IMSI or MSISDN. When the application AP1 thereafter registers the purchase in the charging node BGW, the identity of the terminal MS is also registered in the form of IMSI or MSISDN. The name and address of the subscriber SBS is thereafter read from the subscriber database SBR.

Alternatively to the architecture shown in Figure 1, the GSM-network GSM can be formed to support a GPRS-service (General Packet Data Service). GPRS is a service for delivery of packet data. According to GPRS the terminal has a fixed IP-address. The subscriber database SBR is modified so that subscriber data can be found with reference to the IP-address of the terminal (MS).

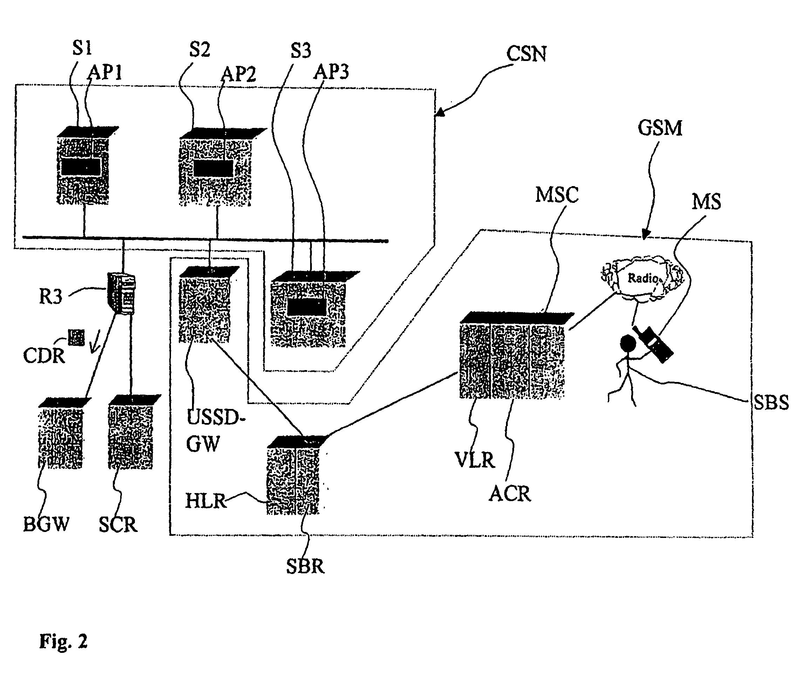

In Figure 2, the nodes in an alternative system for electronic commerce are shown. As well as the system in Figure 1, this system comprises an internal packet data network CSN, a GSM-network GSM as well as a charging node BGW. A difference compared to the system in Figure 1 is that information between the terminal MS and the application AP1 within the GSM-network is delivered by a USSD-service. Thereby the terminal MS does not need to be equipped with a www-browser. Data from the terminal is sent with/by the USSD-service via the switchboard MSC, the home location register HLR to a USSD Gateway USSD-GW which connects to the packet data network CSN. In the USSD Gateway USSD-GW the data is transformed to fit an internet protocol and is transferred via links in the packet data network to the receiving first application. Data transmission from the first application AP1 to the terminal MS runs in the opposite direction through the same nodes. In each data packet which is transferred by USSD and internet protocol to the first application AP1, its address is stated, as well as the identity and the return address of the terminal MS. The identity of the terminal is stated by its MSISDN (Mobile Station ISDN number) or its IMSI (International Mobile Subscriber Identity).

A further difference in Figure 2 compared to Figure 1 is that a second subscriber database SCR connects to the packet data network CSN via the third router R3. In the second subscriber database SCR, there are entries registered for all subscribers with name and address. A subscriber entry is found with reference to IMSI or MSISDN. The travel agency with the first application AP1 sends an inquiry to the subscriber database SCR and receives thereafter information about the name and address of the buyer SBS. This information is later used for the delivery. As an alternative, with the aid of the name and address, the travel agency itself charges the buyer SBS, instead of letting the operator handle it through the telephone invoice.

The second subscriber database SCR can also be used in Figure 1, for the application to be able to find the identity of the buyer SBS, with the aid of the former, provided that the GPRS-service and thereby fixed IP-addresses are used. The subscriber database SCR is in that case arranged so that subscriber entries will be found with the aid of the corresponding IP-address.

As an alternative to charging via the charging database BGW of the operator, an account number at a credit card company is used for charging the buyer/subscriber SBS. In the home location register HLR, an account number has been registered in advance, which the subscriber has the right to use. When the subscriber in this case requests to buy the travel arrangement, he states his credit card number as well as an address to which tickets are to be delivered. The application thereafter sends an inquiry via the USSD Gateway to the HLR whether or not the stated account number may be used from the terminal MS. The identity of the terminal MS is stated in the inquiry. If the stated credit card number corresponds to the earlier registered one in the home location register HLR, a confirmation is sent back to the application AP1 that the credit card number can be used. The tickets are thereafter delivered to the stated address. The buyer/subscriber SBS is thereafter charged in a previously known manner via a credit card company, which has issued the credit card number.

The registration of the credit card number in the home location register HLR is made by the operator after the credit card company and the subscriber have approved to this being done.

The present invention is intended for use when the buyer SBS and a seller physically meet and agree upon a purchase. Instead of paying the seller cash, the buyer connects to a second application AP2 from his/her mobile terminal MS. The second application AP2 offers a payment service. By order of the second application AP2, the purchase is registered in the charging database BGW in a manner described above. The buyer will later be charged and the seller paid in a similar manner to that of a credit card purchase. In order for the seller to deliver the merchandise, the buyer has to show a receipt showing that the purchase has been registered. The receipt is generated and its correctness is checked by the seller according to the following.

From the terminal MS, merchandise, price and seller are sent to the second application AP2. The application AP2 sends these data as well as point of time and terminal identity to the charging node BGW for registration. The application AP2 also generates a receipt code by using a certain algorithm on any or some pieces of information chosen out of the registered pieces of information. The receipt code is sent back to the terminal MS.

The seller also has access to the algorithm and knowledge about which information it is to act upon. The seller also derives a code in the same manner as the application AP2. Preferably, the seller uses a computer for this.

The receipt code obtained in the terminal MS is shown to the seller, and if it corresponds to the code which has been derived at the seller, he/she knows that the purchase has been registered for later payment. The seller thereafter delivers the merchandise.

The receipt code is presented by the terminal, for example with bar code. The bar code is read by the seller via a bar code reader and is transferred to the seller's computer for comparison with the code generated at the seller.

In the embodiment described in connection with Figure 1 above, a www-browser in the terminal MS is used for ordering the merchandise, and the purchase is registered in a charging node BGW. Of course, a credit card may instead be used for charging, as well as the embodiment described in connection with Figure 2. Likewise, the system shown in Figure 2 can have a charging node BGW with the same function as the one described in connection with Figure 1.

For lack of a better word, merchandise if here used for all types of merchandise which are obtained in exchange for payment, also services.

The invention is, of course, not limited to the embodiments described above and shown in the drawing, but can be modified within the scope of the attached claims.

## Claims

1. A method for payment of a merchandise or service by a subscriber (SBS) offered by means of a payment service application (AP2) in a serving computer (S2) connected to a packet data network (CSN), where the subscriber has a subscription in a mobile radio network (GSM) and uses a mobile terminal (MS) for access the packed data network (CSN) via the mobile radio network (GSM)
**characterized in that** it comprises the steps of:
- the, payment service application (AP2) receives, from the mobile terminal (MS), data relating to the type of merchandise and price of the merchandise or service and the identity of the seller,
- Sending, from the payment service application (AP2), the data relating to the type of merchandise and price of the merchandise or service, the identity of the seller and time information to a charging function (BGW), wherein the identity of the subscriber (SBS) is secured thanks to identity checks that already are built-in in the GSM network by sending an IP-address of the mobile terminal to the charging function (BGW).

2. A method according to claim 1 comprising the step of:
- sending, from the payment service application (AP2), a receipt code to the mobile terminal (MS)

3. A method according to claim 2 where the receipt code is a bar code

4. A method according to any of claim 1-3 comprising the step of:
- delivering of the receipt code to the seller of the merchandise or service associated to the payment

5. A method according to any of claim 1-4 where the mobile terminal (MS) comprises a www-browser for transfer, to the payment service application (AP2), information related to the payment of a merchandise or service

6. A method according to any of claim 1-5 where the charging function is a credit card function and the method comprises the step of:
- the payment service application (AP2) receives credit card information from the mobile terminal (MS)
- the payment service application (AP2) charges the credit card

7. A method according to claim 6 comprising the steps of:
- Registration of credit card information and subscriber data in a subscriber database (HLR),
- the payment service application (AP2) receives the identity of the terminal
- the payment service application (AP2) contacts the subscriber database (HLR) and controls that the credit card is associated to the subscriber (SBS).

8. A method for payment of a merchandise or service by a subscriber (SBS) offered by means of a payment service application (AP2) in a serving computer (S2) connected to a packet data network (CSN), where the subscriber has a subscription in a mobile radio network (GSM) and uses a mobile terminal (MS) for access the packed data network (CSN) via the mobile radio network (GSM)
**characterized in that** it comprises the steps of:
- the mobile terminal (MS) sends, to the payment service application (AP2) connected to a charging function, the data relating to the type of merchandise and price of the merchandise or service and the identity of the seller, wherein the identity of the subscriber (SBS) is secured thanks to identity checks that already are built-in in the GSM network by sending an IP-address of the mobile terminal to the charging function (BGW).

9. A method according to claim 8 comprises the step of:
- the mobile terminal (MS) receives, from the payment service application (AP2), a receipt code for the payment

10. A method according to claim 9 where the receipt code is a bar code.

11. A method according to any of claim 8-10, where the charging function is a credit card function and the method comprises the step of.
- the mobile terminal (MS) sends, to the payment service application (AP2), credit card information.

12. A method according to any of claim 8 to 11 where the mobile terminal (MS) comprises a www-browser for transfer, to the payment service application (AP2), information related to the payment of a merchandise or service.

13. An apparatus for running a payment service application (AP2) for managing a subscribers (SBS) payment of a merchandise or service
**characterized in that** the payment service application (AP2),
- comprises means for communication with a packet data network (CSN) to which the subscriber (SBS), which has a subscription in a mobile radio network (GSM), can access via the mobile radio network (GSM) by using a mobile terminal (MS)
- comprises means for receiving, from the mobile terminal (MS), the data relating to the type of merchandise and price of the merchandise or service and the identity of the seller,
- comprises means for sending the data relating to the type of merchandise and price of the merchandise or service, the identity of the seller, time information to a charging function (BGW), wherein the identity of the subscriber (SBS) is secured thanks to identity checks that already are built-in in the GSM network by sending an IP-address of the mobile terminal to the charging function (BGW).

14. An apparatus for running a payment service application (AP2) according to claim 13 comprising
- means for sending a receipt code to the mobile terminal (MS)

15. An apparatus for running a payment service application (AP2) according to claim 14 where the receipt code is a bar code.

16. An apparatus for running a payment service application (AP2) according to an of claim 14-16 where the charging function is a credit card function and comprises:
- means for receiving, from the mobile terminal (MS), credit card information

17. An apparatus for running a payment service application (AP2) according to claim 16 where the credit card information is stored together with subscriber data in a subscriber database (HLR) and the method comprises:
- means for contacting the subscriber database (HLR) and controlling that the credit card is associated to the subscriber (SBS)

18. A system for managing payment of a merchandise or service by a subscriber (SBS) in a packet data network (CSN) comprising at least one serving computer (S1-S3) and at least one payment service application (AP1-AP3) in said serving computer **characterized in that**:
- the system comprises a mobile radio network (GSM) connected to the packet data network
- the mobile radio network (GSM) comprises at least mobile terminal (MS) belonging to a subscriber (SBS)
- the system comprises a charging function (BGW) for charging the subscriber
- the system comprises means for, upon the request from said subscriber, setting up a session between the mobile terminal (MS) and the payment service application (AP1-AP3) for direct transfer of information associated to a subscribers payment of a merchandise or service
- the system comprises means for, upon the request from said payment service application (AP1-AP3), setting up a session between the payment service application (AP1-AP3) and the charging function (BGW) for transfer information related to charging the subscriber for a payment of a merchandise or service, wherein the identity of the subscriber (SBS) is secured thanks to identity checks that already are built-in in the GSM network by sending an IP-address of the mobile terminal to the charging function (BGW).

## Patentansprüche

1. Verfahren zur Bezahlung einer Ware oder Dienstleistung durch einen Teilnehmer (SBS), die mittels einer Bezahldienstanwendung (AP2) in einem versorgenden Computer (S2), der mit einem Paketdatennetzwerk (CSN) verbunden ist, angeboten wird, wobei der Teilnehmer ein Abonnement in einem Mobilfunknetzwerk (GSM) hat und ein mobiles Endgerät (MS) zum Zugriff auf das Paketdatennetzwerk (CSN) über das Mobilfunknetzwerk (GSM) verwendet,
**dadurch gekennzeichnet, dass** es die Schritte umfasst:
- die Bezahldienstanwendung (AP2) empfängt vom mobilen Endgerät (MS) Daten, die sich auf den Typ der Ware und den Preis der Ware oder Dienstleistung beziehen, und die Identität des Verkäufers,
- von der Bezahldienstanwendung (AP2) erfolgendes Senden der Daten, die sich auf den Typ der Ware und den Preis der Ware oder Dienstleistung beziehen, der Identität des Verkäufers und von Zeitinformation an eine Abbuchungsfunktion (BGW), wobei die Identität des Teilnehmers (SBS) dank Identitätsprüfungen, die bereits im GSM-Netzwerk eingebaut sind, durch Senden einer IP-Adresse des mobilen Endgeräts an die Abbuchungsfunktion (BGW) gesichert wird.

2. Verfahren nach Anspruch 1, umfassend den Schritt:
- von der Bezahldienstanwendung (AP2) erfolgendes Senden eines Empfangscodes an das mobile Endgerät (MS).

3. Verfahren nach Anspruch 2, wobei der Empfangscode ein Strichcode ist.

4. Verfahren nach einem der Ansprüche 1 bis 3, umfassend den Schritt:
- Zustellen des Empfangscodes an den Verkäufer der Ware oder Dienstleistung, die der Bezahlung zugeordnet ist.

5. Verfahren nach einem der Ansprüche 1 bis 4, wobei das mobile Endgerät (MS) einen WWW-Browser zur Übermittlung von Information, die sich auf die Bezahlung einer Ware oder Dienstleistung bezieht, an die Bezahldienstanwendung (AP2) umfasst.

6. Verfahren nach einem der Ansprüche 1 bis 5, wobei die Abbuchungsfunktion eine Kreditkartenfunktion ist und das Verfahren die Schritte umfasst:
- die Bezahldienstanwendung (AP2) empfängt Kreditkarteninformation vom mobilen Endgerät (MS),
- die Bezahldienstanwendung (AP2) belastet die Kreditkarte.

7. Verfahren nach Anspruch 6, umfassend die Schritte:
- Registrierung von Kreditkarteninformation und Teilnehmerdaten in einer Teilnehmerdatenbank (HLR),
- die Bezahldienstanwendung (AP2) empfängt die Identität des Endgeräts,
- die Bezahldienstanwendung (AP2) kontaktiert die Teilnehmerdatenbank (HLR) und kontrolliert, dass die Kreditkarte dem Teilnehmer (SBS) zugeordnet ist.

8. Verfahren zur Bezahlung einer Ware oder Dienstleistung durch einen Teilnehmer (SBS), die mittels einer Bezahldienstanwendung (AP2) in einem versorgenden Computer (S2), der mit einem Paketdatennetzwerk (CSN) verbunden ist, angeboten wird, wobei der Teilnehmer ein Abonnement in einem Mobilfunknetzwerk (GSM) hat und ein mobiles Endgerät (MS) zum Zugriff auf das Paketdatennetzwerk (CSN) über das Mobilfunknetzwerk (GSM) verwendet,
**dadurch gekennzeichnet, dass** es den Schritt umfasst:
- das mobile Endgerät (MS) sendet an die mit einer Abbuchungsfunktion verbundene Bezahldienstanwendung (AP2) die Daten, die sich auf den Typ der Ware und den Preis der Ware oder Dienstleistung beziehen, und die Identität des Verkäufers, wobei die Identität des Teilnehmers (SBS) dank Identitätsprüfungen, die bereits im GSM-Netzwerk eingebaut sind, durch Senden einer IP-Adresse des mobilen Endgeräts an die Abbuchungsfunktion (BGW) gesichert wird.

9. Verfahren nach Anspruch 8, umfassend den Schritt:
- das mobile Endgerät (MS) empfängt von der Bezahldienstanwendung (AP2) einen Empfangscode für die Bezahlung.

10. Verfahren nach Anspruch 9, wobei der Empfangscode ein Strichcode ist.

11. Verfahren nach einem der Ansprüche 8 bis 10, wobei die Abbuchungsfunktion eine Kreditkartenfunktion ist und das Verfahren den Schritt umfasst:
- das mobile Endgerät (MS) sendet Kreditkarteninformation an die Bezahldienstanwendung (AP2).

12. Verfahren nach einem der Ansprüche 8 bis 11, wobei das mobile Endgerät (MS) einen WWW-Browser zur Übermittlung von Information, die sich auf die Bezahlung einer Ware oder Dienstleistung bezieht, an die Bezahldienstanwendung (AP2) umfasst.

13. Vorrichtung zum Ausführen einer Bezahldienstanwendung (AP2) zum Verwalten einer Bezahlung einer Ware oder Dienstleistung durch einen Teilnehmer (SBS),
**dadurch gekennzeichnet, dass** die Bezahldienstanwendung (AP2):
- Mittel zur Kommunikation mit einem Paketdatennetzwerk (CSN) umfasst, auf das der Teilnehmer (SBS), der ein Abonnement in einem Mobilfunknetzwerk (GSM) hat, über das Mobilfunknetzwerk (GSM) durch Verwenden eines mobilen Endgeräts (MS) zugreifen kann,
- Mittel zum Empfangen der Daten, die sich auf den Typ der Ware und den Preis der Ware oder Dienstleistung beziehen, und der Identität des Verkäufers vom mobilen Endgerät (MS) umfasst,
- Mittel zum Senden der Daten, die sich auf den Typ der Ware und den Preis der Ware oder Dienstleistung beziehen, der Identität des Verkäufers und von Zeitinformation an eine Abbuchungsfunktion (BGW) umfasst, wobei die Identität des Teilnehmers (SBS) dank Identitätsprüfungen, die bereits im GSM-Netzwerk eingebaut sind, durch Senden einer IP-Adresse des mobilen Endgeräts an die Abbuchungsfunktion (BGW) gesichert wird.

14. Vorrichtung zum Ausführen einer Bezahldienstanwendung (AP2) nach Anspruch 13, umfassend:
- Mittel zum Senden eines Empfangscodes an das mobile Endgerät (MS).

15. Vorrichtung zum Ausführen einer Bezahldienstanwendung (AP2) nach Anspruch 14, wobei der Empfangscode ein Strichcode ist.

16. Vorrichtung zum Ausführen einer Bezahldienstanwendung (AP2) nach einem der Ansprüche 14 bis 16, wobei die Abbuchungsfunktion eine Kreditkartenfunktion ist und umfasst:
- Mittel zum Empfangen von Kreditkarteninformation vom mobilen Endgerät (MS).

17. Vorrichtung zum Ausführen einer Bezahldienstanwendung (AP2) nach Anspruch 16, wobei die Kreditkartenfunktion gemeinsam mit Teilnehmerdaten in einer Teilnehmerdatenbank (HLR) gespeichert wird, wobei die Vorrichtung umfasst:
- Mittel zum Kontaktieren der Teilnehmerdatenbank (HLR) und Kontrollieren, dass die Kreditkarte dem Teilnehmer (SBS) zugeordnet ist.

18. System zum Verwalten der Bezahlung einer Ware oder Dienstleistung durch einen Teilnehmer (SBS) in einem Paketdatennetzwerk (CSN), das mindestens einen versorgenden Computer (S1-S3) und mindestens eine Bezahldienstanwendung (AP1-AP3) in dem versorgenden Computer umfasst,
**dadurch gekennzeichnet, dass**:
- das System ein Mobilfunknetzwerk (GSM) umfasst, das mit dem Paketdatennetzwerk verbunden ist,
- das Mobilfunknetzwerk (GSM) mindestens ein mobiles Endgerät (MS) umfasst, das zu einem Teilnehmer (SBS) gehört,
- das System eine Abbuchungsfunktion (BGW) zum Abbuchen beim Teilnehmer umfasst,
- das System Mittel umfasst, um bei Anforderung von dem Teilnehmer eine Sitzung zwischen dem mobilen Endgerät (MS) und der Bezahldienstanwendung (AP1-AP3) zur direkten Übermittlung von Information, die der Bezahlung eines Teilnehmers für eine Dienstleistung oder Ware zugeordnet ist, einzurichten,
- das System Mittel umfasst, um bei Anforderung von der Bezahldienstanwendung (AP1-AP3) eine Sitzung zwischen der Bezahldienstanwendung (AP1-AP3) und der Abbuchungsfunktion (BGW) zur Übermittlung von Information, die einer Bezahlung einer Ware oder Dienstleistung durch einen Teilnehmer zugeordnet ist, einzurichten, wobei die Identität des Teilnehmers (SBS) dank Identitätsprüfungen, die bereits im GSM-Netzwerk eingebaut sind, durch Senden einer IP-Adresse des mobilen Endgeräts an die Abbuchungsfunktion (BGW) gesichert wird.

## Revendications

1. Procédé destiné au paiement d'une marchandise ou d'un service par un abonné (SBS), proposé au moyen d'une application de service de paiement (AP2) dans un ordinateur de service (S2) connecté à un réseau de données en paquets (CSN), où l'abonné a souscrit un abonnement dans un réseau radio mobile (GSM) et utilise un terminal mobile (MS) pour accéder au réseau de données en paquets (CSN) via le réseau radio mobile (GSM),
**caractérisé en ce qu'**il comporte l'étape ci-dessous dans laquelle :
- l'application de service de paiement (AP2) reçoit, à partir du terminal mobile (MS), des données connexes au type de marchandise et au prix de la marchandise ou du service, ainsi que l'identité du vendeur ;
et l'étape ci-dessous consistant à :
- envoyer, à partir de l'application de service de paiement (AP2), les données connexes au type de marchandise et au prix de la marchandise ou du service, l'identité du vendeur et des informations temporelles, à une fonction de tarification (BGW), dans lequel l'identité de l'abonné (SBS) est protégée par des vérifications d'identité qui sont déjà intégrées dans le réseau GSM par l'envoi d'une adresse IP du terminal mobile à la fonction de tarification (BGW).

2. Procédé selon la revendication 1, comprenant l'étape ci-dessous consistant à :
- envoyer, à partir de l'application de service de paiement (AP2), un code de réception au terminal mobile (MS).

3. Procédé selon la revendication 2, dans lequel le code de réception est un code à barres.

4. Procédé selon l'une quelconque des revendications 1 à 3, comprenant l'étape ci-dessous consistant à :
- délivrer le code de réception au vendeur de la marchandise ou du service associé au paiement.

5. Procédé selon l'une quelconque des revendications 1 à 4, dans lequel le terminal mobile (MS) comprend un navigateur Web pour transférer, à l'application de service de paiement (AP2), des informations relatives au paiement d'une marchandise ou d'un service.

6. Procédé selon l'une quelconque des revendications 1 à 5, dans lequel la fonction de tarification est une fonction de carte de crédit, et le procédé comprend les étapes ci-dessous dans lesquelles :
- l'application de service de paiement (AP2) reçoit des informations de carte de crédit en provenance du terminal mobile (MS) ;
- l'application de service de paiement (AP2) débite la carte de crédit.

7. Procédé selon la revendication 6, comprenant les étapes ci-dessous dans lesquelles :
- un enregistrement d'informations de carte de crédit et de données d'abonnés dans une base de données d'abonnés (HLR) est mis en oeuvre;
- l'application de service de paiement (AP2) reçoit l'identité du terminal ;
- l'application de service de paiement (AP2) contacte la base de données d'abonnés (HLR) et vérifie que la carte de crédit est associée à l'abonné (SBS).

8. Procédé destiné au paiement d'une marchandise ou d'un service par un abonné (SBS), proposé au moyen d'une application de service de paiement (AP2) dans un ordinateur de service (S2) connecté à un réseau de données en paquets (CSN), où l'abonné a souscrit un abonnement dans un réseau radio mobile (GSM) et utilise un terminal mobile (MS) pour accéder au réseau de données en paquets (CSN) via le réseau radio mobile (GSM) ;
**caractérisé en ce qu'**il comporte les étapes ci-dessous dans lesquelles :
- le terminal mobile (MS) envoie, à l'application de service de paiement (AP2) connectée à une fonction de tarification, les données connexes au type de marchandise et au prix de la marchandise ou du service, ainsi que l'identité du vendeur, dans lequel l'identité de l'abonné (SBS) est protégée par des vérifications d'identité qui sont déjà intégrées dans le réseau GSM par l'envoi d'une adresse IP du terminal mobile à la fonction de tarification (BGW).

9. Procédé selon la revendication 8 comportant l'étape ci-dessous dans laquelle :
- le terminal mobile (MS) reçoit, à partir de l'application de service de paiement (AP2), un code de réception pour le paiement.

10. Procédé selon la revendication 9, dans lequel le code de réception est un code à barres.

11. Procédé selon l'une quelconque des revendications 8 à 10, dans lequel la fonction de tarification est une fonction de carte de crédit et le procédé comprend l'étape ci-dessous dans laquelle :
- le terminal mobile (MS) envoie, à l'application de service de paiement (AP2), des informations de carte de crédit.

12. Procédé selon l'une quelconque des revendications 8 à 11, dans lequel le terminal mobile (MS) comprend un navigateur Web pour transférer, à l'application de service de paiement (AP2), les informations relatives au paiement d'une marchandise ou d'un service.

13. Dispositif destiné à exécuter une application de service de paiement (AP2) en vue de gérer un paiement, par un abonné (SBS), relatif à une marchandise ou un service ;
**caractérisé en ce que** l'application de service de paiement (AP2) :
- comporte un moyen permettant de communiquer avec un réseau de données en paquets (CSN) auquel l'abonné (SBS), lequel a souscrit à un abonnement dans un réseau radio mobile (GSM), peut avoir accès via le réseau radio mobile (GSM) en utilisant un terminal mobile (MS) ;
- comporte un moyen pour recevoir, à partir du terminal mobile (MS), les données connexes au type de marchandise et au prix de la marchandise ou du service, ainsi que l'identité du vendeur ;
- comporte un moyen pour envoyer les données connexes au type de marchandise et au prix de la marchandise ou du service, l'identité du vendeur, et des informations temporelles, à une fonction de tarification (BGW), dans lequel l'identité de l'abonné (SBS) est protégée par des vérifications d'identité qui sont déjà intégrées dans le réseau GSM par l'envoi d'une adresse IP du terminal mobile à la fonction de tarification (BGW).

14. Dispositif destiné à exécuter une application de service de paiement (AP2) selon la revendication 13, comprenant :
- un moyen pour envoyer un code de réception au terminal mobile (MS).

15. Dispositif destiné à exécuter une application de service de paiement (AP2) selon la revendication 14, dans lequel le code de réception est un code à barres.

16. Dispositif destiné à exécuter une application de service de paiement (AP2) selon l'une quelconque des revendications 14 à 16, dans lequel la fonction de tarification est une fonction de carte de crédit et comporte :
- un moyen pour recevoir, à partir du terminal mobile (MS), des informations de carte de crédit.

17. Dispositif destiné à exécuter une application de service de paiement (AP2) selon la revendication 16, dans lequel les informations de carte de crédit sont stockées avec les données d'abonnés dans une base de données d'abonnés (HLR), le dispositif comportant :
- un moyen pour contacter la base de données d'abonnés (HLR) et vérifier que la carte de crédit est associée à l'abonné (SB S).

18. Système destiné à gérer le paiement d'une marchandise ou d'un service par un abonné (SBS) dans un réseau de données en paquets (CSN) comprenant au moins un ordinateur de service (S1-S3) et au moins une application de service de paiement (AP 1-AP3) dans ledit ordinateur de service ;
**caractérisé en ce que** :
- le système comporte un réseau radio mobile (GSM) connecté au réseau de données en paquets ;
- le réseau radio mobile (GSM) comprend au moins un terminal mobile (MS) appartenant à un abonné (SBS) ;
- le système comporte une fonction de tarification (BGW) pour facturer l'abonné ;
- le système comporte un moyen pour, à la demande dudit abonné, établir une session entre le terminal mobile (MS) et l'application de service de paiement (AP1 - AP3) en vue d'un transfert direct d'informations associées au paiement d'un abonné concernant une marchandise ou un service ;
- le système comporte un moyen pour, à la demande de ladite application de service de paiement (AP1 - AP3), établir une session entre l'application de service de paiement (AP1 - AP3) et la fonction de tarification (BGW) pour transférer des informations connexes à la tarification de l'abonné pour un paiement d'une marchandise ou d'un service, dans lequel l'identité de l'abonné (SBS) est protégée par des vérifications d'identité qui sont déjà intégrées dans le réseau GSM par l'envoi d'une adresse IP du terminal mobile à la fonction de tarification (BGW).
